# EUROPEAN PATENT SPECIFICATION

(11) **EP 2 931 681 B1**
(45) Date of publication and mention of the grant of the patent: **12.04.2017**
(21) Application number: 12824929.9
(22) Date of filing: 17.12.2012
(51) Int. Cl.: C05F 17/02

(54) **COMPOSTING DEVICE FOR ORGANIC WASTE**
KOMPOSTIERUNGSVORRICHTUNG FÜR ORGANISCHE ABFÄLLE
DISPOSITIF DE COMPOSTAGE POUR DÉCHETS ORGANIQUES

(43) Date of publication of application: 21.10.2015
(73) Proprietor: Comar S.R.L., 53048 Sinalunga - Siena (IT)
(72) Inventor: SCAPERROTTA, Mauro, I-53048 Sinalunga - SI (IT)
(74) Representative: Paparo, Aldo
(86) International application number: PCT/IT2012/000383
(87) International publication number: WO 2014/097325

(56) References cited:
- EP-A2- 1 153 902
- WO-A1-2008/022388
- WO-A1-2011/114357
- JP-A- H05 116 734
- US-A- 3 178 267
- US-A- 3 845 939
- US-A- 5 145 581

## Description

### Technical field

This invention relates to a composting device for organic waste. This device will find useful applications in the disposal of organic waste such as, for example, food waste. The device is also able to break down waste of an organic nature coming from private household kitchens or catering establishments, or from geographical areas subject to the separate collection of waste.

### Background art

A composting device for organic waste in the prior art comprises a cylindrically shaped container having a first portion at an end in which the organic waste is inserted. The container also has a second portion at a further end, from which the compost is extracted.

More in detail, after being inserted in the container, the organic waste is heated by electrical heating elements until reaching a predetermined temperature of approximately 40°C, so as to promote the growth of bacterial colonies. Oxygen is also supplied through an aereation opening, introducing air coming from the outside environment into the first portion of the container. This triggers a process for fermenting the organic waste inside the first portion of the container.

A screw feeder, coaxial with the cylindrical container and inside it, rotates for moving the waste being processed towards an intermediate zone of the container positioned between the first and the second portion. The temperature of the waste in the intermediate zone, raised by the heat developed by the bacteria during fermentation, reaches approximately 60°C.

With the completion of the fermentation the organic waste is transformed into compost which, pushed by the rotation of the screw feeder, reaches the second portion of the container. The temperature lowers, and the hot gases produced by the fermentation are evacuated through a vent positioned on a wall of the container at the second portion. The compost is then extracted from the container through an outlet, which is also positioned at the second portion of the container. US 3,178,267 discloses a digester including a rotatable drum of substantial length through which the component to be digested are passed while mixed. The digester has a closed recirculation system to recirculate a mixture of air and gases resulting form the fermentation. The material to be digested is added through the inlet where it is mixed with recirculated air in a screw. The material is slowly transported to the outlet of the digester. In the vicinity of the outlet an exhaust conduit is present with a fan. The exhaust conduit is in fluid communication with a return conduit. Said conduit is connected to a fan and a damper is present to control the addition of fresh air. The pressure, temperature and humidity of the air are controlled by sensors and different dampers are positioned in the return conduit to adjust those parameters to the air to be returned. The materials are first pulverized to pass through a 200 mesh screen (inorganic) and a 8 mesh screen (organic),

WO 2011/114357 A1 discloses a composting device for organic materials, comprising a container exhibiting a first portion for introducing organic materials therein, and a second portion for discharging a compost therefrom, said container further exhibiting, in correspondence of said first portion, an aeration mouth connectable with the external environment to admit at least air into said first portion of container, said container further comprising, in correspondence of said second portion, a vent to expel the gases produced by said organic materials; means for handling said organic materials to move them from the first portion to the second portion; characterized in that said vent is selectively connectible in fluid communication with said aeration mouth for introducing said gases into said first portion of container.

US 3,845,393 discloses a composting apparatus comprising a drum with agitators and moisture control system. Before entering the drum, the waste is passed through a series of screening discs and chopping blades to downsize and screen the incoming material to be composted. Prior art composting devices have a vent selectively connectable in fluid communication with an aeration outlet for introducing gas into the first portion of the container. This reduces the energy consumption for heating the organic waste.

The prior art composting devices described above have a major disadvantage, since objects which are not organic waste can also be inserted inside the compositing device, such as, for example, caps, cutlery, plates and the like, thereby considerably reducing the efficiency of the composting devices.

### Detailed description

According to a first aspect, in this context, the technical purpose which forms the basis of this invention is to provide a composting device for organic waste which is free of the above mentioned drawback.

More specifically, the aim of this invention to provide a composting device for organic waste which is able to reduce to a minimum the possibility of inserting non-organic waste in it.

According to a second aspect, in this context, the technical purpose which forms the basis of this invention is to provide a method for selectively detecting the origin and the quantity of the organic waste which is inserted in a composting device for organic waste.

These and other aims are substantially achieved by a composting device for organic waste as described in one or more of the appended claims.

Other features and advantages will become more apparent from the detailed description of a preferred non-limiting embodiment of a composting device for organic waste according to this invention.

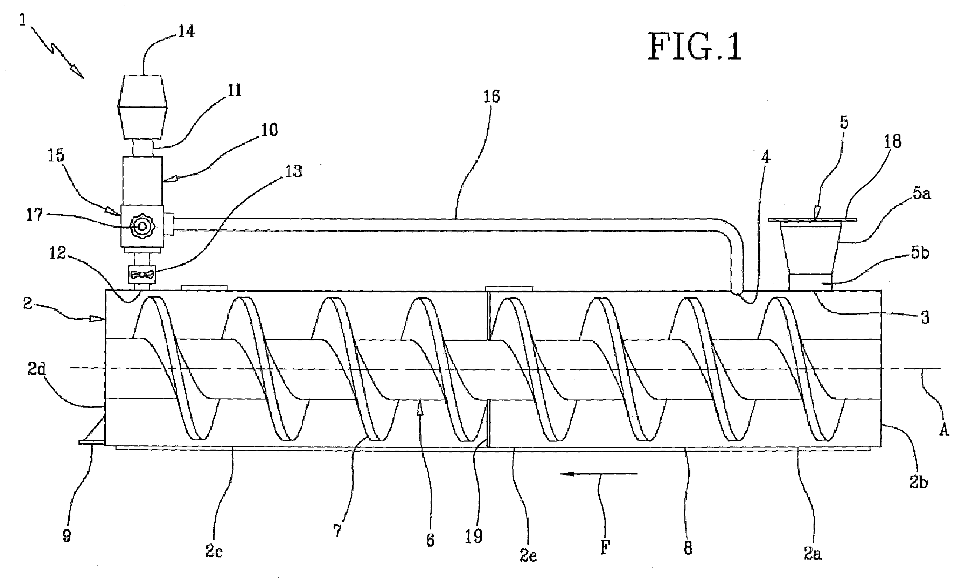

This description is provided with reference to Figure 1, which is also non-limiting and provided by way of example only, which illustrates a side view, partly in cross-section, of a composting device for organic waste according to this invention.

With reference to Figure 1, the numeral 1 denotes in its entirety a composting device for organic waste. More specifically, the composting device 1 is able to process organic materials, for example household waste, and transform it into compost.

The composting device 1 comprises a container 2 having a first portion 2a at an end 2b in which the organic materials are inserted. Similarly, the container 2 has a second portion 2c at a further end 2d, from which the compost is extracted. A fermentation reaction is triggered in the first portion 2a, and continues in an intermediate zone 2e of the container 2 positioned between the first 2a and the second portion 2c. The organic materials are transfomred into compost in the intermediate zone 2e. The fermentation stops in the second portion 2c and the compost undergoes a maturing process.

The composting device 1 for organic waste according to this invention comprises a first filter 18 positioned upstream of the first portion 2a of the container 2 and a second filter 19 positioned inside the container between the first portion 2a and the second portion 2c.

In this way, non-organic objects, such as, for example, caps, cutlery, plates and the like, which are erroneously supplied to the composting device 1 of this invention, are prevented from being inserted in the container 2, where only organic waste is processed. The action of the first filter 18 therefore allows the efficiency of the composting device 1 of this invention to be improved.

Preferably, the first filter 18 is movable from a first filtering position to a second outlet position.

In this way, for example following rotating, inclining or verticalizing of the first filter 18, the objects which have been considered non-organic and therefore unsuitable for being inserted inside the container 2 of the composting device 1 of this invention are removed by the first filter 18 and collected in a suitable container (not shown in the drawing).

The compositing device 1 also comprises, advantageously, a device (not shown in the drawing) for monitoring the first filter 18.

The first filter 18 can be controlled manually, automatically or by means of software connected to a processor.

In a preferred embodiment, the device for monitoring the first filter 18 consists of a user who examines the contents of the waste supplied at the composting device inlet, selects the waste considered to be non-organic and separates it from the waste considered to be organic, thus preventing entry inside the container 2 of the composting device 1 of waste considered to be non-organic.

In another preferred embodiment, the device for monitoring the first filter 18 consists of an automated device, for example a robotized arm.

In yet another preferred embodiment, the device for monitoring the first filter 18 is controlled by suitable management software.

More in detail, the container 2 has a prismatic shape, preferably cylindrical. Moreover, the container 2 has a main axis of extension "A" preferably substantially horizontal. The main axis of extension "A" is, preferably, an axis of symmetry of the container 2.

In a first preferred embodiment, the container 2 has a main dimension or length of 0.5 m. Advantageously, this allows the composting device 1 to be housed on a balcony of a private home.

In a second alternative embodiment, the container 2 can have larger dimensions, such as, for example, several metres, for processing a greater volume of waste, produced, for example, by the kitchen of a restaurant or hotel.

In a third alternative embodiment, the container 2 can have even larger dimensions, such as, for example, several tens of metres, for processing an even greater volume of waste, such as, for example, the product of a separate collection of waste carried out by a population within a particular geographical area.

The above-mentioned container 2 has, advantageously, an opening 3 for inserting organic materials. The opening 3 is located at the first portion 2a. Moreover, in the preferred embodiment, the composting device 1 comprises a waste shredder 5 positioned at the above-mentioned opening 3. More in detail, the waste shredder 5 comprises a hopper 5a which allows waste to be inserted in a chopper 5b connected to it and positioned substantially at the opening 3. Advantageously, this allows the organic materials to be chopped before introducing them into the container 2 and, consequently, favours the fermentation of the organic materials.

Advantageously, at least one heater (not illustrated) is housed inside the container 2, preferably in the first portion 2a. The purpose of the heater is to provide heat to the organic materials, to heat them to a predetermined temperature, preferably of approximately 40°C, so as to promote the growth of bacterial colonies and start the fermentation.

Preferably, the composting device 1 comprises a plurality of heaters, suitably arranged inside the container 2. In a preferred embodiment the heaters are electrical resistors.

Advantageously, the container 2 also has an aeration outlet 4 positioned at the first portion 2a of the container 2. The purpose of the aeration outlet 4 is to introduce air coming from the outside environment to supply oxygen to the above-mentioned bacterial colonies. This triggers a process for fermenting the organic materials inside the first portion 2a of the container 2.

The composting device 1 also comprises a second filter 19 positioned inside the container 2. This prevents the passage of particles in the second portion 2c of the container 2 with dimensions greater than a predetermined dimension, since the particles are not able to pass through the mesh of the second filter 19.

The particles with dimensions greater than the predetermined dimension will be retained upstream of the second filter 19. In this position, these particles will continue to be subjected over time to various treatments, such as, for example, termal treament, heat treatment and rotation inside the container 2. Following this continuous series of treatments, these particles, of organic material, which initially had dimensions such that they could not pass through the second filter 19, will be progressively chopped, making the dimensions increasingly smaller until they can pass through the second filter 19.

The compositing device 1 also comprises, advantageously, movement means 6 for the organic materials inserted inside the container 2, so as to move them from the first portion 2a to the second portion 2c in the direction indicated by the arrow F.

In the embodiment illustrated in Figure 1, the movement means 6 comprise a screw feeder 7 inserted inside the container 2. The screw feeder 7 has an axis of rotation substantially coinciding with the main axis of extension "A" of the container 2, and it performs the function of pushing the organic materials from the first portion 2a to the second portion 2c of the container 2.

More specifically, the screw feeder 7 rotates for moving the waste being processed towards the intermediate zone 2e of the container 2. In the intermediate zone 2e the fermentation, triggered in the first portion 2a, supplies heat to the waste, the temperature of which reaches approximately 60°C.

Moreover, the screw feeder 7 has the further purpose of moving the waste being processed from the intermediate zone 2c to the second portion 2c of the container 2.

The means 6 for moving the waste also comprise a motor (not illustrated) preferably electric, operating on the screw conveyor 7 for rotating it.

In an alternative embodiment, not illustrated, the movement means 6 can comprise, in place of the screw feeder 7, a shaft positioned along the main axis of extension "A" of the container 2. In this case, the movement means 6 comprise blades fixed to the shaft. The blades extend up to a cylindrical wall 8 of the container 2 and, rotating as one with the shaft, operate in the same way as the above-mentioned screw feeder 7.

The movement means 6 are advantageously adjustable. More specifically, the speed of rotation of the screw feeder 7 can be varied, so as to control the hold time of the organic materials inside the container 2.

The organic materials are then pushed in the second portion 2c of the container 2. With the stopping of the fermentation process which occurs in the above-mentioned second portion 2c of the container 2 the organic materials transform into compost. The compost then undergoes a lowering of the temperature inside the second portion 2c of the container 2.

The composting device 1 comprises an outlet 9 located on the second portion 2c of the container 2, so as to allow the extraction of the compost once it has cooled.

The composting device 1 also comprises a vent 10 for evacuating the gases produced by the fermentation. The vent 10 is positioned at the second portion 2c of the container 2.

More specifically, the vent 10 comprises a flue 11 extending away from the container 2, preferably along a substantially vertical direction. The flue 11 is connected to the container 2 at an opening 12 for evacuating the gases. Moreover, in the preferred embodiment, the vent 10 comprises a suction device 13 which can be, for example, a fan such as that schematically illustrated in Figure 1. The suction device 13 is connected to the vent 10 preferably at the outlet 12 for evacuating the gases, and performs the function of forcing a flow of gas out of the container 2.

Advantageously, in the preferred embodiment, the composting device comprises a third filter 14 connected to the vent 10 and preferably positioned on the flue 11, so as to retain any harmful components of the outlet gases. Moreover, the third filter14 has the useful function of suppressing the gas odours developed by the fermentation of the organic materials.

As well as providing an escape path for the fermentation gases of the organic materials, the vent 10 is selectively connectable in fluid communication with the above-mentioned aeration outlet 4, in such a way that it can reintroduce the gases in the first portion 2a of the container 2. Advantageously, the above-mentioned suction device 13 also performs the function of sucking the gases from the second portion 2c of the container 2 and forcing them into the aeration outlet 4.

In more detail, the composting device 1 comprises an element 15 for mixing the flow of gas active on the vent 10 for diverting a quantity of gas towards the aeration outlet 4. The mixing element 15 is adjustable, in such a way as to vary the quantity of gas directed towards the aeration outlet 4.

In the embodiment illustrated, the composting device 1 comprises a conduit 16. The conduit extends from the vent 10 to the aeration outlet 4, in such a way that the latter can be placed in fluid communication with the vent 10. More specifically, the conduit 16 extends from the evacuation outlet 12 to the aeration outlet 4. It should be noted that, as shown in Figure 1, an initial portion of the conduit 16 coincides with an initial portion of the flue 11.

To adjust the miximg of gas and air, the mixing element 15 comprises a valve 17 operatively positioned along the conduit 16. More specifically, the valve 17 is located at the flue 11 preferably downstream of the suction device 13. It should be noted that he valve 17 is in fluid communication with the outside environment.

More in detail, the valve 17 can be switched between a first configuration wherein the gas coming from the container 2 is completely expelled towards the outside environment, and a second configutrarion wherein the gas is completely directed towards the aeration outlet 4. The valve 17 can also adopt a plurailty of intermediate configurations between the first and the second configuration. Advantageously, this allows the mixing of gas and air to be varied a as required.

Advantageously, in the preferred embodiment the composting device also comprises sensor means (not illustrated) inside the container 2 and, in particular, the sensor means comprise at least one temperaturae sensor. Advantageously, the sensor means can comprise further sensors which, for example, can measure the moisture content, the pH level or the concentration of carbon dioxide inside the container 2.

In this way, the fermentation process of the organic materials inside the container 2 of the composting device 1 according to this invention is controlled.

Advantageously, the composting device also comprises a control unit (not illustrated) which is able to process the signals coming from the sensor means. The control unit is therefoe able to act on the movement means 6 for varying the rotation speed of the screw feeder 7 as a function of this signal. The control unit can also, advantageously, control the activation of the heater for adjusting the temperature in the first portion 2a of the container 2.

Moreover, the control unit can adjust the position of the valve 17 as a function of the signal, in particular switching it at least from the first to the second configuration. This allows the temperature in the first portion 2a of the container 2 to be varied without acting on the heater.

The composting device 1 also comprises a power supply unit (not illustrated), which is able to pick up electricty from an external mains supply. Alternatively or in addition to the power supply unit, the composting device can comprise photovoltaic panels or wind turbines which, advantageously, allow the absorption of electricity from the external mains supply to be reduced or eliminated.

Advantageously, in the preferred embodiment the composting device 1 also comprises at least one detection element (not illustrated) which is able to detect information contained on identification devices, such as, for example, barcodes, smart cards, motor vehicle number plates or the like, associated with the element supplying the organic materials to a composting device.

Advantageously, the information detetected by the detection element is processed by means of management software.

In this way it is possible to identify a predetermined supplier (for example, a firm, company, administrative body, or the like) which has supplied the organic waste for processing to the composting device, based on the reading of an identification code of a trailer, truck or articulated lorry associated with the supplier; the reading being performed by means of the at least one detection device contained in the composting device.

It is therefore possible, using the at least one detection device and the processing of the data detected in this way by means of a management software, to establish the quantity of organic waste periodically supplied by each predetermined supplier to a composting device. This for the purpose of the statistical percentage of organic waste as part of a separate collection of the waste and for the purpose of using a composting device, for a possible redistribution of the costs.

For this reason, according to a second aspect, this invention also refers to a method for selectively detecting the origin and the quantity of the organic waste which is inserted in a composting device by means of at least one detection means which is able to read the information contained on the identification devices associated with the element supplying the organic materials.

Advantageously, this method also comprises the step of returning the compost produced by the composting device to the same supplier of the organic materials.

The above-mentioned composting device achieves the preset aim.

Moreover, the filter positioned upstream of the opening of the container allows the insertion inside the container of non-organic waste to be avoided, thus improving the efficiency of the composting device.

Moreover, the device is also able to achieve a major advantage of identifying the supplier which has supplied the waste to the composting device.

## Claims

1. A composting device for organic waste, comprising a container (2) having a first portion (2a) for inserting organic materials therein and a second portion (2c) for discharging compost, the container (2) also having at the first portion (2a) an aeration outlet (4) which can be connected with the outside environment for introducing at least air inside the first portion (2a) of the container (2); the container (2) also comprising at the second portion (2c) a vent (10) for expelling the gases produced by the organic materials and means (6) for moving the organic materials for moving them from the first (2a) to the second portion (2c); wherein the vent (10) is selectively connectable in fluid communication with the aeration outlet (4) for introducing the gases in the first portion (2a) of the container (2), **characterised in that** the composting device (1) for organic waste also comprises a first filter (18) positioned upstream of the first portion (2a), wherein the composting device also comprises a second filter (19) positioned inside the container (2) for preventing the passage in the second portion (2c) of particles with dimensions larger than a predetermined dimension.

2. The composting device according to claim 1, **characterised in that** it also comprises a device for monitoring the first filter (18).

3. The composting device according to claim 2, wherein the first filter (18) is movable from a first filtering position to a second outlet position.

4. The composting device according to any one of the preceding claims, which also comprises a detection element which is able to detect the information contained on identification devices associated with the element supplying the organic materials to the composting device (1).

5. The composting device according to claim 4, wherein the information detected by the detection element is processed by means of management software.

6. The composting device according to any one of the preceding claims, **characterised in that** it also comprises an element (15) for mixing the flow of gas active on the vent (10) for diverting a quantity of the gas towards the aeration outlet (4), wherein the mixing element (15) is operatively positioned between the vent (10) and the aeration outlet (4) for mixing and adjusting the introduction of air and gas in the first portion (2a) of the container (2).

7. The composting device according to any one of the preceding claims, **characterised in that** it also comprises a conduit (16) connected to the vent (10) and to the aeration outlet (4), of the mixing element (15) comprising a valve (17) operatively positioned along the conduit (16), wherein the valve (17) is in fluid communication with the outside environment.

8. The composting device according to claim 7, **characterised in that** the valve (17) can be switched between a first configuration wherein the gas coming from the container (2) is completely expelled towards the outside environment, and a second configuration wherein the gas is completely directed towards the aeration outlet (4).

9. The composting device according to claim 8, **characterised in that** the valve (17) can adopt a plurality of intermediate configurations between the first and the second configuration.

10. The composting device according to any one of the preceding claims, **characterised in that** it also comprises a third filter (14) connected to the vent (10) for preventing the escape of odours from the container (2).

11. The composting device according to any one of the preceding claims, **characterised in that** the container (2) has an opening (3) for introducing organic materials located at the first portion (2a); the composting device (1) comprising a waste shredder (5) positioned at the opening (3) for shredding the organic materials.

12. The composting device according to any one of the preceding claims, **characterised in that** it also comprises a suction device (13) connected to the vent (10) for sucking the gases from the second portion (2c) of the container (2) and forcing them into the aeration outlet (4).

13. The composting device according to any one of the preceding claims, **characterised in that** the means (6) for moving the organic materials comprise a screw feeder (7) inserted inside the container (2) for pushing the organic materials from the first (2a) to the second portion (2c) of the container (2).

14. The composting device according to any one of the preceding claims, **characterised in that** the means (6) for moving the organic materials comprise a plurality of blades inserted inside the container (2) for pushing the organic materials from the first (2a) to the second portion (2c) of the container (2).

15. The composting device according to any one of the preceding claims, which also comprises, at the first portion (2a), an aeration outlet (4) connectable with the outside environment for introducing air inside the first portion (2a) of the container (2) and, at the second portion (2c), a vent (10) for expelling the gases produced by the organic materials, the vent (10) being selectively connectable in fluid communication with the aeration outlet (4) for introducing the gases in the first portion (2a) of the container (2).

## Patentansprüche

1. Kompostierungsvorrichtung für organische Abfälle, umfassend einen Behälter (2), aufweisend einen ersten Abschnitt (2a), um organische Materialien in diesen einzufügen, und einen zweiten Abschnitt (2c), um den Kompost zu entladen, wobei der Behälter (2) am ersten Abschnitt (2a) auch einen Lüftungsauslass (4) aufweist, der mit der außenseitigen Umgebung verbunden werden kann, um zumindest Luft in den ersten Abschnitt (2a) des Behälters (2) einzuführen, wobei der Behälter (2) zudem am zweiten Abschnitt (2c) eine Entlüftung (10) aufweist, um die von den organischen Materialien erzeugten Gase abzuführen, und Mittel (6) zum Bewegen der organischen Materialien, um diese vom ersten (2a) zum zweiten Abschnitt (2c) zu bewegen, wobei die Entlüftung (10) selektiv in Fluidkommunikation mit dem Lüftungsauslass (4) verbunden werden kann, um die Gase in den ersten Abschnitt (2a) des Behälters (2) einzuführen, **dadurch gekennzeichnet, dass** die Kompostierungsvorrichtung (1) für organische Abfälle zudem einen ersten Filter (18) umfasst, der vor dem ersten Abschnitt (2a) positioniert ist, wobei die Kompostierungsvorrichtung auch einen zweiten Filter (19) umfasst, der im Behälter (2) positioniert ist, um zu vermeiden, dass durch den zweiten Abschnitt (2c) Teilchen strömen, deren Abmessungen größer als eine vorgegebene Größe sind.

2. Kompostierungsvorrichtung nach Anspruch 1, **dadurch gekennzeichnet, dass** sie auch eine Vorrichtung zur Überwachung des ersten Filters (18) umfasst,

3. Kompostierungsvorrichtung nach Anspruch 2, wobei der erste Filter (18) von einer ersten Filterposition in eine zweite Auslassposition bewegbar ist.

4. Kompostierungsvorrichtung nach einem der vorhergehenden Ansprüche, die auch ein Erfassungselement umfasst, das in der Lage ist, die in Identifikationsvorrichtungen enthaltenen Informationen zu erfassen, assoziiert mit dem Element, das die organischen Materialien der Kompostierungsvorrichtung (1) zuführt.

5. Kompostierungsvorrichtung nach Anspruch 4, wobei die vom Erfassungselement erfassten Informationen mittels einer Managementsoftware verarbeitet werden.

6. Kompostierungsvorrichtung nach einem der vorhergehenden Ansprüche, dadurch gekenntzeichnet, dass sie auch ein Element (15) umfasst, um den an der Entlüftung (10) aktiven Gasstrom zu mischen, um eine Menge des Gases zum Lüftungsauslass (4) umzuleiten, wobei das Mischelement (15) betriebswirksam zwischen der Entlüftung (10) und dem Lüftungsauslass (4) positioniert ist, um die Einführung von Luft und Gas in den ersten Abschnitt (2a) des Behälters (2) zu mischen und zu regeln.

7. Kompostierungsvorrichtung nach einem der vorhergehenden Ansprüche, **dadurch gekennzeichnet, dass** sie auch eine Leitung (16), verbunden mit der Entlüftung (10) und dem Lüftungsauslass (4), des Mischelements (15) verbunden ist, umfassend ein Ventil (17), das betriebswirksam entlang der Leitung (16) positioniert ist, wobei das Ventil (17) in Fluidkommunikation mit der außenseitigen Umgebung steht.

8. Kompostierungsvorrichtung nach Anspruch 7, **dadurch gekennzeichnet, dass** das Ventil (17) zwischen einer ersten Konfiguration, in der das vom Behälter (2) einströmende Gas vollständig zur außenseitigen Umgebung abgeführt wird, und einer zweiten Konfiguration, in der das Gas vollständig zum Lüftungsauslass (4) gerichtet wird, umgeschaltet werden kann.

9. Kompostierungsvorrichtung nach Anspruch 8, **dadurch gekennzeichnet, dass** das Ventil (17) eine Vielzahl an Zwischenkonfigurationen zwischen der ersten und der zweiten Konfiguration einnehmen kann.

10. Kompostierungsvorrichtung nach einem der vorhergehenden Ansprüche, **dadurch gekennzeichnet, dass** sie auch einen dritten Filter (14) umfasst, der mit der Entlüftung (10) verbunden ist, um das Entweichen von Gerüchen aus dem Behälter (2) zu verhindern.

11. Kompostierungsvorrichtung nach einem der vorhergehenden Ansprüche, **dadurch gekennzeichnet, dass** der Behälter (2) eine öffnung (3) besitzt, um organische Materialien einzuführen, die sich am ersten Abschnitt (2a) befinden, wobei die Kompostierungsvorrichtung (1) eine Abfallmühle (5) umfasst, die sich an der Öffnung (3) befindet, um die organischen Materialien zu zermahlen.

12. Kompostierungsvorrichtung nach einem der vorhergehenden Ansprüche, **dadurch gekennzeichnet, dass** sie auch eine Saugvorrichtung (13) umfasst, die mit der Entlüftung (10) verbunden ist, um die Gase aus dem zweiten Abschnitt (2c) des Behälters (2) abzusaugen und diese in den Lüftungsauslass (4) einzuleiten.

13. Kompostierungsvorrichtung nach einem der vorhergehenden Ansprüche, **dadurch gekennzeichnet, dass** die Mittel (6) zum Bewegen der organischen Materialien eine Schraubenzuführung (7) umfassen, die in den Behälter (2) eingesetzt ist, um die organischen Materialien vom ersten (2a) zum zweiten Abschnitt (2c) des Behälters (2) zu schieben.

14. Kompostierungsvorrichtung nach einem der vorhergehenden Ansprüche, **dadurch gekennzeichnet, dass** die Mittel (6) zum Bewegen der organischen Materialien eine Vielzahl an Schaufeln umfassen, die in den Behälter (2) eingefügt sind, um die organischen Materialien vom ersten (2a) zum zweiten Abschnitt (2c) des Behälters (2) zu schieben.

15. Kompostierungsvorrichtung nach einem der vorhergehenden Ansprüche, wobei sie am ersten Abschnitt (2a) auch einen Lüftungsauslass (4) umfasst, der mit der außenseitigen Umgebung verbunden werden kann, um Luft in den ersten Abschnitt (2a) des Behälters (2) einzuführen, und am zweiten Abschnitt (2c) eine Entlüftung (10), um die von den organischen Materialien erzeugten Gase abzuführen, wobei die Entlüftung (10) selektiv in Fluidkommunikation mit dem Lüftungsauslass (4) verbunden werden kann, um die Gase in den ersten Abschnitt (2a) des Behälters (2) einzuführen.

## Revendications

1. Dispositif de compostage pour déchets organiques, comprenant un conteneur (2) comportant une première partie (2a) destinée à introduire des matières organiques en son sein et une seconde partie (2c) destinée à décharger le compost, le conteneur (2) comportant aussi au niveau de la première partie (2a) une sortie d'aération (4) pouvant être reliée à l'environnement extérieur pour introduire au moins de l'air à l'intérieur de la première partie (2a) du conteneur (2) ; le conteneur (2) comprenant aussi, au niveau de la seconde partie, (2c) un évent (10) servant à expulser les gaz produits par les matières organiques et des moyens (6) servant à déplacer les matières organiques pour les déplacer de la première (2a) à la seconde partie (2c) ; dans lequel l'évent (10) peut sélectivement être relié en communication fluidique avec la sortie d'aération (4) pour introduire les gaz dans la première partie (2a) du conteneur (2), **caractérisé en ce que** le dispositif de compostage (1) pour déchets organiques comprend aussi un premier filtre (18) positionné en amont de la première partie (2a), dans lequel le dispositif de compostage comprend aussi un second filtre (19) positionné à l'intérieur du conteneur (2) pour empêcher le passage dans la seconde partie (2c) de particules aux dimensions plus grosses qu'une dimension prédéfinie.

2. Dispositif de compostage selon la revendication 1, **caractérisé en ce qu'**il comprend aussi un dispositif servant à contrôler le premier filtre (18).

3. Dispositif de compostage selon la revendication 2, dans lequel le premier filtre (18) est mobile d'une première position de filtration à une seconde position de sortie.

4. Dispositif de compostage selon l'une quelconque des revendications précédentes, comprenant aussi un élément de détection pouvant détecter les informations contenues sur des dispositifs d'identification associés à l'élément fournissant les matières organiques au dispositif de compostage (1).

5. Dispositif de compostage selon la revendication 4, dans lequel les informations détectées par l'élément de détection sont traitées par l'intermédiaire d'un logiciel de gestion.

6. Dispositif de compostage selon l'une quelconque des revendications précédentes, **caractérisé en ce qu'**il comprend aussi un élément (15) servant à mélanger le flux de gaz actif sur l'évent (10) pour dévier une quantité de gaz vers la sortie d'aération (4), dans lequel l'élément mélangeur (15) est fonctionnellement positionné entre l'évent (10) et la sortie d'aération (4) pour mélanger et régler l'introduction d'air et de gaz dans la première partie (2a) du conteneur (2).

7. Dispositif de compostage selon l'une quelconque des revendications précédentes, **caractérisé en ce qu'**il comprend aussi un conduit (16) relié à l'évent (10) et à la sortie d'aération (4) de l'élément mélangeur (15) comprenant une vanne (17) fonctionnellement positionnée le long du conduit (16), dans lequel la vanne (17) est en communication fluidique avec l'environnement extérieur.

8. Dispositif de compostage selon la revendication 7, **caractérisé en ce que** la vanne (17) peut être commutée entre une première configuration dans laquelle le gaz provenant du conteneur (2) est complètement expulsé vers l'environnement extérieur, et une seconde configuration dans laquelle le gaz est complètement dirigé vers la sortie d'aération (4).

9. Dispositif de compostage selon la revendication 8, **caractérisé en ce que** la vanne (17) peut adopter une pluralité de configurations intermédiaires entre la première et la seconde configuration.

10. Dispositif de compostage selon l'une quelconque des revendications précédentes, **caractérisé en ce qu'**il comprend aussi un troisième filtre (14) relié à l'évent (10) pour éviter que des mauvaises odeurs ne s'échappent du conteneur (2).

11. Dispositif de compostage selon l'une quelconque des revendications précédentes, **caractérisé en ce que** le conteneur (2) comporte une ouverture (3), servant à introduire des matières organiques, située en correspondance de la première partie (2a) ; le dispositif de compostage (1) comprenant un broyeur de déchets (5) positionné en correspondance de l'ouverture (3) pour broyer les matières organiques,

12. Dispositif de compostage selon l'une quelconque des revendications précédentes, **caractérisé en ce qu'**il comprend aussi un dispositif d'aspiration (13) relié à l'évent (10) pour aspirer les gaz provenant de la seconde partie (2c) du conteneur (2) et les forcer à rejoindre la sortie d'aération (4).

13. Dispositif de compostage selon l'une quelconque des revendications précédentes, **caractérisé en ce que** les moyens (6) servant à déplacer les matières organiques comprennent un distributeur à vis (7) inséré à l'intérieur du conteneur (2) pour pousser les matières organiques de la première (2a) à la seconde partie (2c) du conteneur (2).

14. Dispositif de compostage selon l'une quelconque des revendications précédentes, **caractérisé en ce que** les moyens (6) servant à déplacer les matières organiques comprennent une pluralité de lames insérées à l'intérieur du conteneur (2) pour pousser les matières organiques de la première (2a) à la seconde partie (2c) du conteneur (2),

15. Dispositif de compostage selon l'une quelconque des revendications précédentes, comprenant aussi, en correspondance de la première partie (2a), une sortie d'aération (4) pouvant être reliée à l'environnement extérieur pour introduire l'air à l'intérieur de la première partie (2a) du conteneur (2) et, en correspondance de la seconde partie (2c), un évent (10) servant à expulser les gaz produits par les matières organiques, l'évent (10) pouvant être sélectivement relié en communication fluidique à la sortie d'aération (4) pour introduire les gaz dans la première partie (2a) du conteneur (2).
